# EUROPÄISCHE PATENTSCHRIFT

(11) **EP 3 263 532 B1**
(45) Veröffentlichungstag und Bekanntmachung des Hinweises auf die Patenterteilung: **19.09.2018**
(21) Anmeldenummer: 17174553.2
(22) Anmeldetag: 06.06.2017
(51) Int. Cl.: C02F 9/00, C22B 7/00, B03B 9/02, C23G 5/00, B03B 9/04, C02F 11/12, B07B 1/00, B07B 1/42, C22B 1/00, C02F 101/20, C02F 103/16

(54) **ZUNDERSCHLAMMBEHANDLUNGSVORRICHTUNG UND VERFAHREN ZUM BETREIBEN EINER ZUNDERSCHLAMMBEHANDLUNGSVORRICHTUNG**
SCALE SLUDGE TREATMENT DEVICE AND METHOD FOR OPERATING SAME
DISPOSITIF DE TRAITEMENT DE BOUE HUILEUSE ET PROCÉDÉ DE FONCTIONNEMENT D'UN DISPOSITIF DE TRAITEMENT DE BOUE HUILEUSE

(30) Priorität: 01.07.2016 DE 102016112087
(43) Veröffentlichungstag der Anmeldung: 03.01.2018
(73) Patentinhaber: EnBW Energie Baden-Württemberg AG, 76131 Karlsruhe (DE)
(72) Erfinder: TUREK, Rudolf, 76185 Karlsruhe (DE)
(74) Vertreter: Kaufmann, Ursula Josefine

(56) Entgegenhaltungen:
- EP-A1- 0 080 589
- EP-A1- 2 113 490
- CA-A1- 2 610 122
- DE-A1- 19 607 493
- DE-A1- 19 713 714

## Beschreibung

### Stand der Technik

Die Erfindung betrifft eine Zunderschlammbehandlungsvorrichtung und ein Verfahren zum Betreiben einer Zunderschlammbehandlungsvorrichtung.

Es sind verschiedene Verfahren bekannt, Zunderschlamm zu reinigen. Zunderschlamm entsteht bei Prozessen in Stahlwalzwerken. Zunderschlamm ist mit öligen Verunreinigungen wie Öle, Fette und dergleichen verunreinigt, die beispielsweise durch die Hydraulik und die eingesetzten geschmierten und geölten Walzwerkzeuge herrühren. So werden bei den Prozessen bis zu 60 unterschiedliche Öle eingesetzt.

Vor einer Rückführung des Prozesswassers aus dem Walzprozess müssen Zunderschlamm und ölige Verunreinigungen entfernt werden. Eine direkte Rückführung von Zunderschlamm ist trotz des hohen Eisengehalts durch die öligen Rückstande begrenzt. Hohe Gehalte an öligen Rückständen führen zu erhöhten Emissionen an flüchtigen organischen Verbindungen und im Extremfall zu Dioxinemissionen. Derart verunreinigter Zunderschlamm muss daher aufwändig und entsprechend teuer entsorgt werden. Je nach Wassergehalt des Zunderschlamms sind zudem große Lagervolumina notwendig.

Aus der US 5,125,966 A ist ein Verfahren bekannt, bei dem Zunderschlamm in einer Attritionszelle unter Zugabe von Wasser und oberflächenaktiven Agenzien behandelt wird. Die Menge des oberflächenaktiven Agens wird abhängig vom Gehalt der öligen Verunreinigungen zugegeben. Der behandelte Zunderschlamm wird abgefiltert, anschließend gespült und getrocknet.

Die EP 0080589 A1 offenbart eine stationäre Anlage, bei der Walzzunder beispielsweise aus einem Walzwerk oder einer Stranggießanlage, behandelt wird.

In dem beschriebenen Verfahren wird der Walzzunder in mehreren Trennstufen, wie einem Mahlwerk, zwei Flotationsstufen, einem Magnetabscheider und einer Kläreinrichtung sowie einer Entwässerungsmaschine gereinigt. Dabei wird der Walzzunder im Mahlwerk und den Flotationsstufen mit einer Vorwäsche und Hauptwäsche gewaschen.

Dokument CA 2610122 A1 beschreibt eine Anlage zur Gewinnung von Bitumen aus ölhaltigem Sand. Die Anlage kann der Abbaustelle in einem Stollen folgen. Optional kann die Anlage zu anderen Standorten transportiert werden.

### Offenbarung der Erfindung

Eine Aufgabe der Erfindung besteht darin, ein Verfahren zum Betreiben einer Zunderschlammbehandlungsvorrichtung anzugeben.

Eine weitere Aufgabe ist, eine ökonomisch vorteilhafte Zunderschlammbehandlungsvorrichtung anzugeben, die eine Wiederverwendung von Zunderschlamm erlaubt und umweltverträglich ist.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird eine modulare Zunderschlammbehandlungsvorrichtung vorgeschlagen, mit der ein erfindungsgemäßes Verfahren durchgeführt wird, umfassend eine erste Trennstufe, die zur nassmechanischen Abtrennung wenigstens eines Teils von an Zunderschlamm anhaftenden öligen Verunreinigungen vorgesehen ist, eine in Prozessrichtung folgende zweite Trennstufe, die zur wenigstens überwiegenden Trennung des in der ersten Trennstufe behandelten Zunderschlamms von den öligen Verunreinigungen vorgesehen ist, sowie eine in Prozessrichtung auf die zweite Trennstufe folgende dritte Trennstufe, die zur wenigstens teilweisen Entwässerung des in der zweiten Trennstufe gereinigten Zunderschlamms vorgesehen ist. In Prozessrichtung ist vor der ersten Trennstufe eine Förderstufe angeordnet, die zum Fördern des in der ersten Trennstufe zu reinigenden Materials zur ersten Trennstufe vorgesehen ist. Die Förderstufe und die erste Trennstufe sind baulich in ein erstes Modul integriert. Die erste Trennstufe umfasst eine Einrichtung zur nassmechanischen Behandlung des Zunderschlamms, die zweite Trennstufe einen Schraubenklassierer und die dritte Trennstufe eine Siebeinrichtung. Im Betrieb der Vorrichtung ist ein Eingang des Schraubenklassierers unterhalb eines Ausgangs der ersten Trennstufe und der Ausgang des Schraubenklassierers oberhalb eines Eingangs der dritten Trennstufe angeordnet, so dass ein Transport des in der ersten Trennstufe behandelten Zunderschlamms im Schraubenklassierer entgegen der Schwerkraft erfolgt.

Die Vorrichtung erlaubt es, Zunderschlamm in unterschiedlichsten Ausgangszuständen mit praktisch gleichem Endergebnis an gereinigtem Zunderschlamm zu behandeln und diesen als werthaltiges Produkt zurückzugewinnen. Vorteilhaft wird die Aufteilung der Vorrichtung in aufeinander folgende Trennstufen dazu genutzt, die Vorrichtung modular zu gestalten. Die modulare Gestaltung erlaubt eine bauraumgünstige Anordnung der Komponenten der Zunderschlammbehandlungsvorrichtung. Ebenso ist eine Standardisierung der Komponenten der Module möglich. Module können einfach ersetzt oder zur Reparatur ausgetauscht werden.

Erfindungsgemäß umfasst die zweite Trennstufe einen Schraubenklassierer. Die Anordnung, dass im Betrieb ein Eingang des Schraubenklassierers unterhalb eines Ausgangs der ersten Trennstufe und ein Ausgang des Schraubenklassierers oberhalb eines Eingangs der dritten Trennstufe angeordnet ist, ermöglicht einen Transport des in der ersten Trennstufe behandelten Zunderschlamms entgegen der Schwerkraft. Damit kann Schmutzwasser mit öligen Verunreinigungen im Eingangsbereich des Schraubenklassierers, der sich unterhalb des Ausgangs befindet, gesammelt werden und der Zunderschlamm als Sediment nach oben zum Ausgang des Schraubenklassierers und zur dritten Trennstufe transportiert werden. Optional kann der Zunderschlamm auf dem Weg zur dritten Trennstufe noch zusätzlich mit Wasser besprüht werden, womit verbleibende Verunreinigungen abgespült werden können. Das Wasser kann entgegen der Transportrichtung des Zunderschlamms zum tieferliegenden Eingangsbereich des Schraubenklassierers fließen.

Vorteilhaft kann die zweite Trennstufe abhängig wenigstens von einem Materialstrom an Zunderschlamm und/oder einer Steigung und/oder einer Drehzahl des Schraubenklassierers betreibbar sein. Zweckmäßigerweise ist die zweite Trennstufe durch die Steuer- und/oder Regeleinheit auf diese Weise betreibbar. Damit lassen sich die Betriebsbedingungen der verschiedenen Trennstufen leicht aufeinander einstellen und an unterschiedliche Eigenschaften verschiedener roher Zunderschlämme anpassen. Dies ermöglicht eine gleichbleibende Qualität des gereinigten Zunderschlamms als Endprodukt der Zunderschlammbehandlungsvorrichtung.

Der als Ausgangsmaterial verfügbare rohe Zunderschlamm liegt üblicherweise in undefinierter Form vor und kann sowohl im Wassergehalt, insbesondere zwischen relativ trockenem Zunder bis zu pumpfähigen Massen, in der Partikelgröße wie auch in der Art und Menge der anhaftenden öligen Verunreinigungen stark schwanken.

Die Zunderschlammbehandlungsvorrichtung ermöglicht das zuverlässige Entfernen von öligen Rückständen am Zunderschlamm so weit, dass dieser am Ende der Behandlung unproblematisch in den Stahlherstellprozess eingebracht werden kann. Dies ist besonders vorteilhaft, da der Eisengehalt im Zunderschlamm erheblich ist.

Ölige Verunreinigungen umfassen beispielsweise Stoffe wie kohlenwasserstoffhaltige Öle, oxidierte und teilweise oxidierte Schmiermittel, Hydraulikflüssigkeiten, Schmierfett, Getriebeöle, Turbinenöle, Walzöl, Tierfette, synthetische Fette, Glykol, Glykolester, Glykolether, organische Säuren, organische Ester, Silikonöle und dergleichen.

Gemäß einer günstigen Ausgestaltung können eines oder mehrere der Module, beispielsweise das erste Modul, als Transportmodul für den Straßentransport ausgebildet sein, insbesondere als Transportcontainer oder Ladeplattform oder Fahrzeuganhänger. Vorteilhaft können die Komponenten der Zunderschlammbehandlungsvorrichtung transportfähig für den Straßenverkehr sein und leicht mit üblichen Nutzfahrzeugen transportiert werden. Dabei können die Komponenten so angeordnet sein, dass der verfügbare Platz im Transportmodul möglichst maximal ausgenutzt ist.

Durch das Bereitstellen von einem oder mehreren Transportmodulen für verschiedene Teile der Zunderschlammbehandlungsvorrichtung kann eine Behandlung von Zunderschlamm vor Ort bei verschiedenen Stahlwalzwerken erfolgen, ohne dass mit öligen Verunreinigungen belasteter Zunderschlamm über die Straße transportiert werden muss. Die Transportmodule können preisgünstig an verschiedenen Orten bei Bedarf eingesetzt werden. Die Zunderschlammbehandlungsvorrichtung kann daher von verschiedenen Nutzern bei Bedarf genutzt werden. Dadurch, dass die Zunderschlammbehandlungsvorrichtung mobil eingesetzt werden kann, sind vor Ort bei den Nutzern keine Investitionen oder Umbauten für eine Zunderschlammbehandlungsvorrichtung notwendig. Dadurch, dass eine gleichbleibend hohe Qualität des gereinigten Zunderschlamms praktisch unabhängig von der Anfangsqualität des rohen Zunderschlamms erreicht werden kann, ist eine vielfältige Nutzung der Zunderschlammbehandlungsvorrichtung in ökonomischer Weise möglich. Vorteilhaft können eines oder mehrere der ersten, zweiten und/oder dritten Module als Transportmodule ausgebildet sein. Beispielsweise kann das erste Modul als Transportmodul ausgebildet sein, wobei die erste Trennstufe mit einem Gesamtvolumen von etwa 1000 Litern ausgelegt sein kann. Alternativ oder zusätzlich kann die erste Trennstufe mit ihrem Ausgang nahe einer maximal verfügbaren Transporthöhe des Transportmoduls angeordnet sein. Dies erlaubt ein Austragen des Zunderschlamms im freien Gefälle unter Ausnutzung der Schwerkraft. Ein zusätzlicher Antrieb ist nicht notwendig.

Alternativ oder zusätzlich kann das zweite Modul als Transportmodul ausgebildet sein, wobei die zweite Trennstufe für einen Zulauf aus der ersten Trennstufe von etwa 12 t/h und für einen Zunderschlamm-Austrag am Ausgang von etwa 4 t/h ausgelegt sein kann. Die Werte sind für Komponenten günstig, die in Modulen in Form von Containern oder dergleichen angeordnet sind. Alternativ oder zusätzlich kann das dritte Modul als Transportmodul ausgebildet sein.

Gemäß einer günstigen Ausgestaltung können die Förderstufe und die erste Trennstufe die gesamte Länge des ersten Moduls einnehmen. Vorteilhaft ist das erste Transportmodul als LKW-Auflieger oder als Standard-Container oder als Ladeplattform ausgebildet, in dem die Komponenten angeordnet sind. Dies erlaubt eine weitere Verbesserung der bauraumgünstigen Anordnung der Komponenten der Zunderschlammbehandlungsvorrichtung.

Die Förderstufe kann vorteilhaft mit einem Frequenzumrichter ausgestattet sein, um eine Fördermenge des Zunderschlamms in die erste Trennstufe bedarfsgerecht einzustellen.

Gemäß einer günstigen Ausgestaltung kann eine Steuer- und/oder Regeleinheit zum Betreiben von einer oder mehreren der Trennstufen und/oder der Förderstufe vorgesehen sein. Vorteilhaft kann die Steuer- und/oder Regeleinheit die Betriebsbedingungen so einstellen, dass unterschiedliche Qualitäten von rohem Zunderschlamm bei der Behandlung ausgeglichen werden können und eine gleichbleibende Qualität des gereinigten Zunderschlamms erreicht werden kann.

Gemäß einer günstigen Ausgestaltung kann die erste Trennstufe abhängig von einem Drehmoment und/oder einer Stromaufnahme eines Rührwerks der ersten Trennstufe betreibbar sein. Zusätzlich oder alternativ kann die dritte Trennstufe abhängig von wenigstens einem Materialvorschub an Zunderschlamm und/oder einer Schichtdicke des Materialstroms an Zunderschlamm und/oder einer Menge und/oder eines Drucks einer Reinigungsflüssigkeit und/oder einer Amplitude und/oder einer Frequenz einer Siebeinrichtung in der dritten Trennstufe betreibbar sein. Damit lassen sich die Betriebsbedingungen der verschiedenen Trennstufen leicht aufeinander einstellen und an unterschiedliche Eigenschaften verschiedener roher Zunderschlämme anpassen. Dies ermöglicht eine gleichbleibende Qualität des Endprodukts der Zunderschlammbehandlungsvorrichtung.

Gemäß einer günstigen Ausgestaltung können im ersten Modul zwischen der Förderstufe und der ersten Trennstufe ein oder mehrere Pumpmodule und ein oder mehrere Sammelbehälter angeordnet sein. Dies erlaubt eine weitere Verbesserung der bauraumgünstigen Anordnung der Komponenten der Zunderschlammbehandlungsvorrichtung.

Gemäß einer günstigen Ausgestaltung kann eine Einfüllanordnung der Förderstufe, insbesondere ein Einfülltrichter, eine Breite des ersten Moduls einnehmen. Dies erlaubt eine weitere Verbesserung der bauraumgünstigen Anordnung der Komponenten der Zunderschlammbehandlungsvorrichtung. Es kann eine Vorratsmenge an Zunderschlamm eingeführt werden, der kontinuierlich in die erste Trennstufe geleitet wird, während die Vorratsmenge diskontinuierlich aufgefüllt werden kann.

Gemäß einer günstigen Ausgestaltung kann die die zweite Trennstufe in ein zweites Modul integriert sein, das für den Betrieb herausnehmbar im ersten Modul gelagert vorgesehen sein kann. Im Falle einer mobilen Anwendung kann ein Transport der zweiten Trennstufe platzsparend und ökonomisch im ersten Transportmodul erfolgen. Am Einsatzort sind keine baulichen Investitionen für die Zunderschlammbehandlungsvorrichtung notwendig. Wird die zweite Trennstufe im ersten Transportmodulgelagert, kann beim Transport nicht benötigter Bauraum im jeweiligen Transportmodul genutzt werden. Insbesondere kann das Modul eine Abrollplattform sein, das am Einsatzort aus dem Transportmodul herausgerollt werden kann. Alternativ kann die zweite Trennstufe als separates Transportmodul dargestellt werden, das mit eigenem Fahrzeug oder als Anhänger zum jeweiligen Einsatzort bewegt werden kann. Dabei können die Komponenten so angeordnet sein, dass der verfügbare Platz im Transportmodul möglichst maximal ausgenutzt ist.

Gemäß einer günstigen Ausgestaltung kann die dritte Trennstufe im zweiten Modul integriert sein. Diese kompakte Anordnung verbessert die Nutzung des Bauraums des zweiten Moduls.

Alternativ kann gemäß einer günstigen Ausgestaltung kann die dritte Trennstufe in ein drittes Modul integriert sein. Das dritte Modul kann insbesondere als Transportmodul für den Straßentransport ausgebildet sein, insbesondere als Transportcontainer, Ladeplattform oder Fahrzeuganhänger. Die Zunderschlammbehandlungsvorrichtung kann mobil an verschiedenen Standorten eingesetzt werden. Vor Ort sind keine baulichen Investitionen für die Zunderschlammbehandlungsvorrichtung notwendig. Dabei können die Komponenten so angeordnet sein, dass der verfügbare Platz im Transportmodul möglichst maximal ausgenutzt ist. Optional kann die zweite Trennstufe im dritten Transportmodul transportiert werden.

Gemäß einer günstigen alternativen Ausgestaltung kann das zweite Modul als Transportmodul für den Straßentransport ausgebildet ist, insbesondere als Transportcontainer oder Ladeplattform.

Gemäß einer günstigen Ausgestaltung kann eine Steuer- und/oder Regeleinheit zum Betreiben von einer oder mehreren der Trennstufen und/oder der Förderstufe vorgesehen sein. Insbesondere kann die Steuer- und/oder Regeleinheit in dem Modul der zweiten Trennstufe angeordnet sein, beispielsweise in einem Schaltschrank. Dort kann die Steuer- und/oder Regeleinheit zum Betreiben von einer oder mehreren der Trennstufen und/oder der Förderstufe bauraumoptimiert untergebracht sein. Ist die zweite Trennstufe als Modul vorgesehen, das im ersten oder dritten Transportmodul transportiert wird, wird das Modul am Einsatzort z.B. auf dem Boden abgestellt, so dass der Schaltschrank mit der Steuer- und/oder Regeleinheit für Bedienpersonal gut zugänglich ist.

Gemäß einer günstigen Ausgestaltung kann eine Zufuhreinrichtung für die Zufuhr von Wasser in die erste Trennstufe vorgesehen sein, mittels derer ein pumpfähiger Zunderschlamm, insbesondere mit einer definierten Obergrenze an Feststoffgehalt, herstellbar sein kann.

Gemäß einer günstigen Ausgestaltung kann an der ersten Trennstufe ein Einlass für pumpfähigen Zunderschlamm vorgesehen sein. Ist der rohe Zunderschlamm pumpfähig, kann dieser unter Umgehung der Förderstufe direkt in die erste Trennstufe eingeleitet werden. Damit können rohe Zunderschlämme von pumpfähig bis trocken in die Zunderschlammbehandlungsvorrichtung eingebracht werden.

Gemäß einer günstigen Ausgestaltung kann die erste Trennstufe eine Einrichtung zur nassmechanischen Behandlung des Zunderschlamms, insbesondere eine Attritionszelle, umfassen. Die Attritionszelle erlaubt einen hohen Energieeintrag in den verunreinigten Zunderschlamm, so dass an den Zunderpartikeln anhaftende Verunreinigungen abgelöst werden können.

Vorteilhaft kann die erste Trennstufe abhängig von einem Drehmoment und/oder einer Stromaufnahme eines Rührwerks der ersten Trennstufe betreibbar sein. Zweckmäßigerweise ist die erste Trennstufe durch die Steuer- und/oder Regeleinheit auf diese Weise betreibbar. Beispielsweise kann Wasser zugegeben werden, wenn der Zunderschlamm zu viskos ist, bis eine gewünschte Obergrenze des Feststoffgehalts im Zunderschlamm erreicht oder unterschritten ist. Die darauffolgenden Behandlungsschritte werden leichter steuerbar.

Alternativ kann zur nassmechanischen Behandlung Ultraschall eingesetzt und die erste Trennstufe mit einer oder mehreren Ultraschallquellen zur Behandlung des Zunderschlamms ausgestattet sein.

Erfindungsgemäß umfasst die dritte Trennstufe eine Siebeinrichtung, insbesondere ein Schwingsieb. Vorteilhaft kann die dritte Trennstufe abhängig wenigstens von einem Materialvorschub an Zunderschlamm und/oder einer Schichtdicke des Materialstroms an Zunderschlamm und/oder einer Menge und/der eines Drucks einer Reinigungsflüssigkeit, insbesondere Wasser, und/oder einer Amplitude und/oder einer Frequenz der Siebeinrichtung in der dritten Trennstufe betreibbar sein. Zweckmäßigerweise kann die Steuer- und/oder Regeleinheit die dritte Trennstufe auf diese Weise betreiben. Vorteilhaft kann die dritte Trennstufe mehrstufig ausgebildet sein, so dass auch feinkörniger gereinigter Zunderschlamm aus dem Abwasser entfernt und weiter verwendet werden kann. Dabei kann die Siebeinrichtung mehrstufig sein, oder es können zwei oder mehr Siebeeinrichtungen hintereinander geschaltet sein.

Gemäß einer günstigen Ausgestaltung können die Transportmodule für den Straßentransport ausgebildet sein, insbesondere als LKW-Auflieger oder Transportcontainer. Damit kann die Zunderschlammbehandlungsvorrichtung unproblematisch von Einsatzort zu Einsatzort verbracht werden. Verunreinigter Zunderschlamm muss nicht vom Stahlwerk zu einer Entsorgungsstelle transportiert werden.

Gemäß eines weiteren Aspekts der Erfindung wird ein Verfahren zum Betreiben einer Zunderschlammbehandlungsvorrichtung vorgeschlagen, wobei eine erste Trennstufe mit einer Füllung von Zunderschlamm befüllt und der Zunderschlamm mit Wasser versetzt wird. Am Zunderschlamm anhaftende ölige Verunreinigungen werden in der ersten Trennstufe durch nassmechanische Behandlung abgetrennt und ein fließfähiges Zunderschlammgemisch aus Zunderschlamm und abgelösten öligen Verunreinigungen und Wasser erzeugt. Das Zunderschlammgemisch wird in eine zweite Trennstufe geleitet, in der eine Flüssig-Fest-Trennung in eine Flüssigphase und ein Sediment erfolgt. Ein Eingang des Schraubenklassierers ist unterhalb eines Ausgangs der ersten Trennstufe und der Ausgang des Schraubenklassierers oberhalb eines Eingangs einer dritten Trennstufe angeordnet, so dass der Zunderschlamm als Sediment im Schraubenklassierer entgegen der Schwerkraft transportiert wird, und eine Abreicherung an öligen Verunreinigungen sowie eine Entwässerung erfolgt, und wobei Schmutzwasser mit öligen Verunreinigungen im Eingangsbereich des Schraubenklassierers gesammelt wird.

Der Zunderschlamm wird als Sediment von der zweiten Trennstufe in die dritte Trennstufe transportiert und ein öliger Teil der Flüssigphase getrennt von der restlichen Flüssigphase abgeführt. Das Sediment wird in der dritten Trennstufe gespült, vom Wasser getrennt und als gereinigtes Produkt ausgebracht.

Es kann zuverlässig Zunderschlamm so weitgehend von öligen Verunreinigungen getrennt werden, dass dieser für eine Wiederverwertung bei der Stahlherstellung geeignet ist. Die erste Trennstufe dient vorteilhaft einer nassmechanischen Behandlung des rohen Zunderschlamms. Eine Zugabe eines oberflächenaktiven Agens ist nicht notwendig.

Zur Inbetriebnahme der Zunderschlammbehandlungsvorrichtung werden deren Module, welche die Vorrichtungskomponenten enthalten, an ihren Einsatzort transportiert und in Prozessrichtung zusammengestellt. Durch den modularen Aufbau der Zunderschlammbehandlungsvorrichtung ist wenig Montageaufwand nötig.

Gemäß einer günstigen Ausgestaltung kann eine Zugabe von Wasser in der ersten Trennstufe abhängig von einem Drehmoment und/oder einer Stromaufnahme eines Rührwerks der ersten Trennstufe erfolgen. Unabhängig vom Ausgangszustand des rohen Zunderschlamms kann dieser in einen fließfähigen Zustand überführt werden, der einen definierten maximalen Feststoffgehalt aufweist.

Gemäß einer günstigen Ausgestaltung können in der zweiten Trennstufe durch Zugabe von Wasser anhaftende ölige Verunreinigungen vom Sediment entgegen einer Transportrichtung in der zweiten Trennstufe abgespült werden. Vorteilhaft kann die zweite Trennstufe ein Schraubenklassierer sein.

Gemäß einer günstigen Ausgestaltung können in der dritten Trennstufe durch Zugabe von Wasser anhaftende ölige Verunreinigungen vom Sediment entgegen einer Transportrichtung in der zweiten Trennstufe abgespült werden.

Die dritte Trennstufe kann abhängig wenigstens von einem Materialvorschub an Zunderschlamm und/oder einer Schichtdicke des Materialstroms an Zunderschlamm und/oder einer Menge und/der eines Drucks einer Reinigungsflüssigkeit, insbesondere Wasser, und/oder einer Amplitude und/oder einer Frequenz der Siebeinrichtung in der dritten Trennstufe betrieben werden.

Gemäß einer günstigen Ausgestaltung kann die erste Trennstufe abhängig von einem Drehmoment und/oder einer Stromaufnahme eines Rührwerks der ersten Trennstufe betrieben werden. Zusätzlich oder alternativ kann die dritte Trennstufe abhängig von wenigstens einem Materialvorschub an Zunderschlamm und/oder einer Schichtdicke des Materialstroms an Zunderschlamm und/oder einer Menge und/oder eines Drucks einer Reinigungsflüssigkeit und/oder einer Amplitude und/oder einer Frequenz einer Siebeinrichtung in der dritten Trennstufe betrieben werden. Damit lassen sich die Betriebsbedingungen der verschiedenen Trennstufen leicht aufeinander einstellen und an unterschiedliche Eigenschaften verschiedener roher Zunderschlämme anpassen. Dies ermöglicht, trotz unterschiedlicher Qualitäten des rohen Zunderschlamms, eine gleichbleibende Qualität des Endprodukts der Zunderschlammbehandlungsvorrichtung.

An die dritte Trennstufe kann sich optional noch eine Entwässerungsstufe für den gereinigten Zunderschlamm anschließen, insbesondere in Form einer Kammerfilterpresse oder einer Zentrifuge. Diese Komponente kann als separates Transportmodul ausgebildet sein oder mit der dritten Trennstufe ein gemeinsames Transportmodul bilden.

Nach einem weiteren Aspekt der Erfindung wird ein mobiles System mit einer Zunderschlammbehandlungsvorrichtung nach dem ersten Aspekt der Erfindung vorgeschlagen, wobei die Zunderschlammbehandlungsvorrichtung ein erstes Modul, umfassend wenigstens eine erste Trennstufe, ein zweites Modul, umfassend wenigstens eine zweite Trennstufe, und ein drittes Modul, umfassend wenigstens eine dritte Trennstufe, aufweist. Wenigstens eines der Module ist als für den Straßentransport ausgebildetes Transportmodul ausgebildet.

Vorteilhaft weist das Transportmodul Maße auf, die Standardmaßen für einen Transport mit Fahrzeugtransport entsprechen. Das Transportmodul kann mit üblichen Transportfahrzeugen transportiert werden.

Nach einer günstigen Ausgestaltung des mobilen Systems kann das erste Modul als Transportmodul ausgebildet sein, wobei die erste Trennstufe mit einem Gesamtvolumen von etwa 1000 Litern ausgelegt sein kann. Alternativ oder zusätzlich kann die erste Trennstufe mit ihrem Ausgang nahe einer maximal verfügbaren Transporthöhe des Transportmoduls angeordnet sein. Dies erlaubt ein Austragen des Zunderschlamms im freien Gefälle unter Ausnutzung der Schwerkraft. Ein zusätzlicher Antrieb ist nicht notwendig.

Alternativ oder zusätzlich kann das zweite Modul als Transportmodul ausgebildet sein, wobei die zweite Trennstufe für einen Zulauf aus der ersten Trennstufe von etwa 12 t/h und für einen Zunderschlamm-Austrag am Ausgang von etwa 4 t/h ausgelegt sein kann. Die Werte sind für Komponenten günstig, die in Modulen in Form von Containern oder dergleichen angeordnet sind. Alternativ oder zusätzlich kann das dritte Modul als Transportmodul ausgebildet sein.

Nach einer günstigen Ausgestaltung des mobilen Systems kann das Transportmodul als für Transportcontainer, Fahrzeuganhänger oder Ladeplattform ausgebildet sein. Die verfügbaren Standardmaße können vorteilhaft für die Komponenten der Zunderschlammbehandlungsvorrichtung genutzt werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein Blockdiagramm einer Zunderschlammbehandlungsvorrichtung nach einem Ausführungsbeispiel der Erfindung;
- Fig. 2: eine schematische Darstellung eines ersten Moduls mit einer Förderstufe und einer ersten Trennstufe in Form einer Attritionszelle;
- Fig. 3: eine schematische Darstellung eines zweiten Moduls mit einer zweiten Trennstufe in Form eines Schraubenklassierers und einer integrierten dritten Trennstufe in Form einer Siebeinrichtung;
- Fig. 4: eine schematische Darstellung eines dritten Moduls mit einer dritten Trennstufe in Form einer Siebeinrichtung;
- Fig. 5-7: in Draufsicht bauraumoptimierte Anordnungen der Förderstufe und Trennstufen;
- Fig. 8: ein Flussdiagramm eines Verfahrens zum Betreiben einer Zunderschlammbehandlungsvorrichtung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

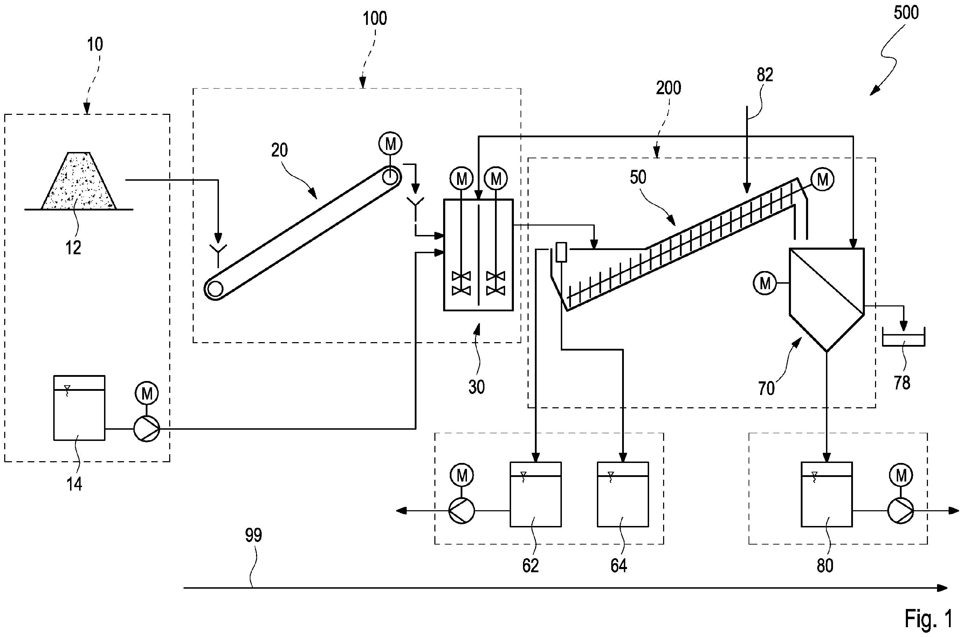

Figur 1 zeigt schematisch zur Erläuterung ein Ausführungsbeispiel der Erfindung mit einer aus mehreren Modulen 100, 200 aufgebauten Zunderschlammbehandlungsvorrichtung 500 an einem Walzwerk als Einsatzort 10. Typischerweise kann am Einsatzort 10 mehr oder weniger trockener, nicht pumpfähiger roher Zunderschlamm als Haufwerk 12 deponiert oder als pumpfähiger roher Zunderschlamm in einem Becken 14 gelagert sein. Der Zunderschlamm ist mit undefinierten Mengen an öligen Verunreinigungen versetzt, die an den Partikeln angelagert sind.

Die modulare Zunderschlammbehandlungsvorrichtung 500 umfasst drei Trennstufen 30, 50, 70, die aufeinanderfolgend entlang einer Prozessrichtung 99 angeordnet sind. Die erste Trennstufe 30 ist zur Abtrennung wenigstens eines Teils von an Zunderschlamm anhaftenden öligen Verunreinigungen vorgesehen und kann insbesondere als Attritionszelle ausgebildet sein. Die zweite Trennstufe 50 ist zur wenigstens überwiegenden Trennung des in der ersten Trennstufe 30 behandelten Zunderschlamms von den öligen Verunreinigungen vorgesehen. Die dritte Trennstufe 70 ist zur teilweisen Entwässerung des in der zweiten Trennstufe 50 gereinigten Zunderschlamms vorgesehen. Optional kann an die dritte Trennstufe 70 noch eine Entwässerungsstufe für den gereinigten Zunderschlamm angeschlossen sein, etwa eine Kammerfilterpresse oder eine Zentrifuge. Der Zunderschlamm ist am Ende der Prozessstrecke durch die Trennstufen 30, 50, 70 soweit von öligen Verunreinigungen befreit, dass eine Wiederverwertung problemlos möglich ist.

In Prozessrichtung 99 vor der ersten Trennstufe 30 ist eine Förderstufe 20 angeordnet, die zum Fördern des in der ersten Trennstufe 30 zu reinigenden Materials zur ersten Trennstufe 30 vorgesehen ist. Die Förderstufe 20 kann beispielsweise als Tragkettenförderer oder Wellkantengurtförderer ausgebildet sein. Die Förderstufe 20 weist eine Einfüllanordnung 22 auf, die insbesondere als Einfülltrichter ausgebildet ist.

Liegt der rohe Zunderschlamm als nicht pumpfähige Masse vor, wird dieser mit einem Radlader oder Bagger oder dergleichen zur Förderstufe 20 gefördert. Die Einfüllanordnung 22 wird von Zeit zu Zeit befüllt und bildet einen Vorratsraum, während die Förderstufe 20 den rohen Zunderschlamm kontinuierlich zur ersten Trennstufe 30 transportieren kann.

Liegt der rohe Zunderschlamm in pumpfähigem Zustand vor, kann dieser mittels einer geeigneten Pumpe direkt in die erste Trennstufe 30 gepumpt werden. Eine geeignete verschleißarme Pumpenart ist beispielsweise eine Membranpumpe.

Die Trennstufen 30, 50, 70 der Zunderschlammbehandlungsvorrichtung 500 sind in den Modulen 100, 200, angeordnet, die bei Bedarf an den Einsatzort 10 gefahren werden. Das erste Transportmodul 100kann vorzugsweise als LKW-Auflieger oder Ladeplattform ausgebildet sein, in denen die zugehörigen Komponenten der Zunderschlammbehandlungsvorrichtung 500 bauraumoptimiert in Breite, Länge und Höhe angeordnet sind.

Die zweite Trennstufe 50 ist in ein zweites Modul 200 integriert. In das zweite Modul 200 ist in diesem Ausführungsbeispiel neben der zweiten Trennstufe 50 auch die dritte Trennstufe 70 integriert. Das zweite Modul 200 kann als Ausrollplattform ausgebildet sein, die zum Transport in das erste Transportmodul 100 eingeschoben werden kann und zur Benutzung am Einsatzort herausgenommen und passend zum ersten Modul 100 platziert werden kann.

Die Trennstufen 30, 50, 70 können mit einer Wasserzufuhr 82 mit Wasser, insbesondere Frischwasser, versorgt werden.

Die Förderstufe 20 und die erste Trennstufe 30 sind in dem ersten Modul 100 integriert. Die Einfüllanordnung 22 in Form des Einfülltrichters nimmt eine Breite des ersten 100 ein, während die Länge des ersten 100 von der Förderstufe 20 und der darauffolgenden ersten Trennstufe 30 eingenommen werden. Vorzugsweise ist unterhalb der Einfüllanordnung 22 ein Vorratsraum vorgesehen, aus dem der Zunderschlamm kontinuierlich zur ersten Trennstufe 30 transportiert wird.

In der ersten Trennstufe 30 wird der Zunderschlamm nassmechanisch behandelt und in eine fließfähigen Zustand gebracht, indem Wasser über eine Zuführung der Wasserzufuhr 82 zugegeben wird und die Füllung der ersten Trennstufe 30 mechanisch bearbeitet wird, so dass sich ölige Verunreinigungen von den Metall- oder Metalloxidpartikeln des Zunderschlamms lösen.

Die zweite Trennstufe 50 ist in Prozessrichtung 99 nach der ersten Trennstufe 30 angeordnet und ist vorteilhaft als Schraubenklassierer ausgebildet, in dem ein Transport des Zunderschlamms entlang einer schrägen Transportstrecke von unten nach oben stattfindet. Der in der ersten Trennstufe 30 behandelte Zunderschlamm wird in die zweite Trennstufe 50 geleitet, wobei sich der metallhaltige Teil des Zunderschlamms als Sediment absetzt und der wässrige Anteil über dem Sediment steht. Das Wasser kann über einen Überlauf mit einstellbarer Höhe abgeführt werden und in einem ersten Sammelbehälter 62 gesammelt und in den Prozess zurückgeführt oder zur Kläranlage geleitet werden. Die öligen Verunreinigungen werden mit einem Ölabscheider, beispielsweise einem Ölskimmer, abgeführt und in einem zweiten Sammelbehälter 64 gesammelt.

Der sedimentierte Zunderschlamm wird mit dem Schraubenklassierer gegen die Schwerkraft nach oben befördert und gleichzeitig entwässert. Entlang der Schraube des Schraubenklassierers, welche die Transportstrecke bildet, wird das Sediment über mehrere Düsen der Wasserzufuhr 82 mit Wasser besprüht, um verbleibende, noch anhaftende ölige Verunreinigungen abzuspülen. Das Wasser läuft zum Eingang der zweiten Trennstufe 50 und gelangt in den ersten Sammelbehälter 62.

Der sedimentierte Zunderschlamm gelangt als Grobgutaustrag an das Ende der zweiten Trennstufe 50 und wird von dort in die dritte Trennstufe 70 geleitet. In der dritten Trennstufe 70, die eine Siebeinrichtung enthält, wird der gereinigte Zunderschlamm zur Feinreinigung nochmals über eine Zuführung der Wasserzufuhr 82 mit Wasser gespült und in der Siebeinrichtung entwässert. Der gereinigte Zunderschlamm wird in einem Sammelbehälter 78 aufgefangen, während das Abwasser in einem Sammelbehälter 80 aufgefangen und beispielsweise in den verschiedenen Reinigungsschritten des Zunderschlamms wiederverwendet oder der Kläranlage zugeführt werden kann. Optional können etwaige feinkörnige Feststoffpartikel des Zunderschlamms, die mit dem Abwasser durch die Siebeinrichtung der dritten Trennstufe 70 in den Sammelbehälter 80 gelangt sind, mechanisch aus dem Abwasser abgetrennt werden (nicht dargestellt) und ebenso wie der zuvor als Siebüberlauf abgetrennte gereinigte Zunderschlamm weiterverwendet werden.

Am Ende der Prozessstrecke ist der Zunderschlamm unabhängig von seinem Ausgangszustand bis auf geringe Reste von öligen Verunreinigungen befreit und kann als werthaltiges Produkt dem Stahlwerkprozess wieder zugeführt werden.

Mit besonderem Vorteil ist die Zunderschlammbehandlungsvorrichtung 500 auf einem oder mehreren LKW-Aufliegern mit Auflieger-Standardmaßen angeordnet und kann per Straßentransport an den gewünschten Einsatzort 10 transportiert werden.

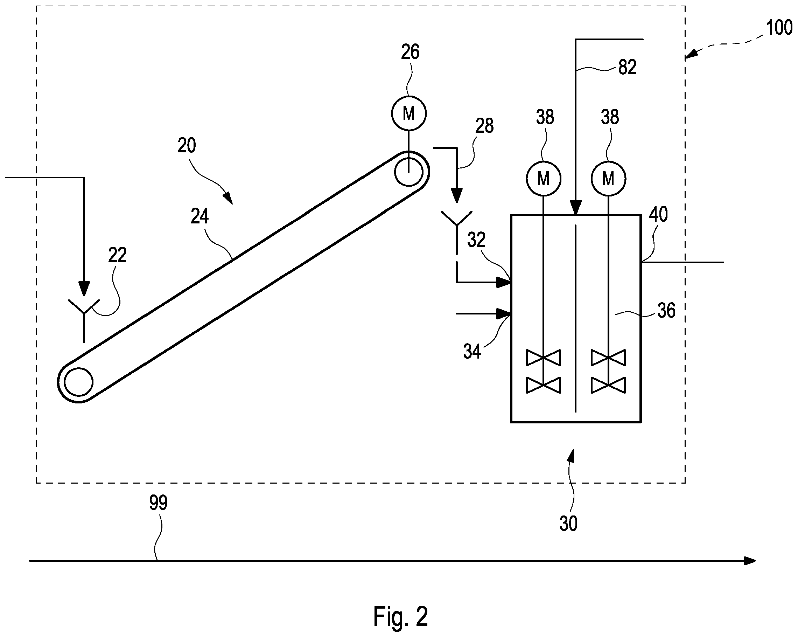

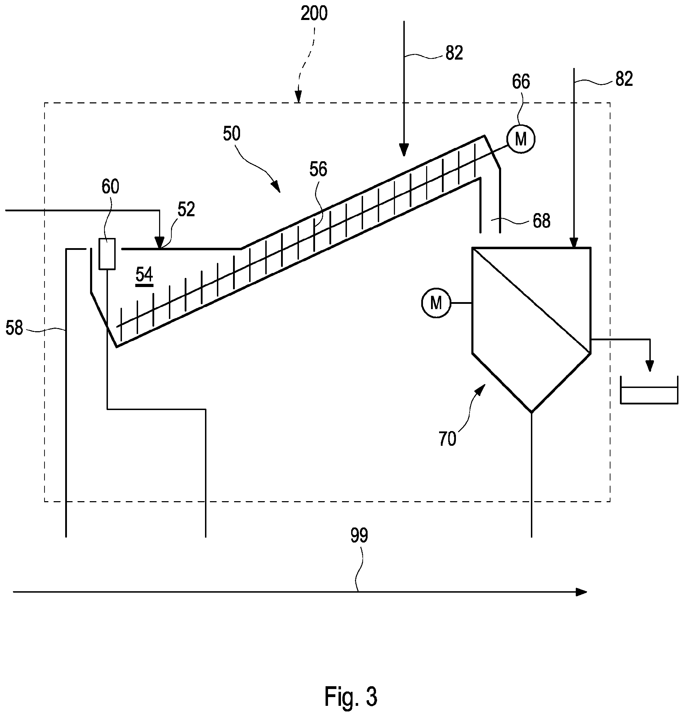

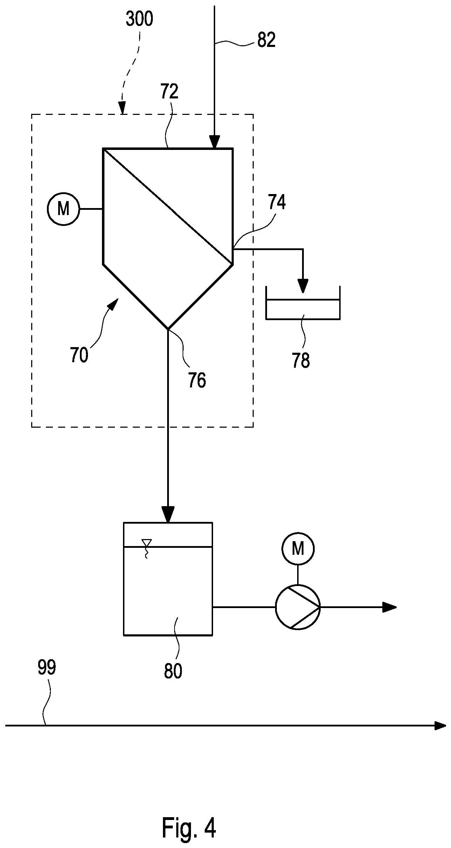

Die Figuren 2 bis 4 zeigen einzelne Komponenten und Trennstufen 20, 50, 70 der Zunderschlammbehandlungsvorrichtung 500 in detaillierter Form. Dabei zeigt Figur 2 eine schematische Darstellung eines ersten Moduls 100, vorzugsweise eines Transportmoduls 100, mit einer Förderstufe 20 und einer ersten Trennstufe 30 in Form einer Attritionszelle, Figur 3 eine schematische Darstellung eines zweiten Moduls 200 mit einer zweiten Trennstufe 50 in Form eines Schraubenklassierers und einer dritten Trennstufe 70 in Form einer Siebeinrichtung. Figur 4 zeigt eine alternativ eine schematische Darstellung eines separaten dritten Moduls 300, insbesondere Transportmoduls 300 mit der dritten Trennstufe 70 in Form einer Siebeinrichtung.

Im ersten Transportmodul 100, wie in Figur 2 dargestellt ist, sind die Förderstufe 20 und die erste Trennstufe 30 integriert. Der nicht pumpfähige Zunderschlamm gelangt über die Förderstufe 20 zur ersten Trennstufe 30. Der Zunderschlamm wird in eine als Einfülltrichter ausgebildete Einfüllanordnung 22 gefüllt, der die Breite des Transportmoduls 100 ausfüllt, gelangt auf eine Förderbahn 24, die mit einem regelbaren Motor 26 betrieben ist und wird am Ausgang 28 in einen Eingang 32 der zweiten Trennstufe 50 geleitet. Unter der Einfüllanordnung 22 kann sich ein Vorrat an rohem Zunderschlamm bilden, der kontinuierlich mit der Förderbahn 24 zum Ausgang 28 transportiert wird.

Hierfür ist bei der Auslegung des Transportmoduls 100 für LKW-Auflieger zwischen Anfang und Ende der Förderbahn 24 ein Höhenunterschied von etwa 1,5 m zu überwinden, wofür besonders Trogkettenförderer oder Wellkantengurtförderer geeignet sind. eine günstige Fördermenge liegt bei etwa 3 m³/h Feststoff, entsprechend etwa 7 t/h Feststoff.

Pumpfähiger Zunderschlamm wird über einen separaten Eingang 34 direkt in die erste Trennstufe 30 gepumpt. Günstig ist hierbei ein Volumenstrom von etwa 8 m³/h, wobei sich der Verschleißfestigkeit wegen Membranpumpen besonders eignen.

Die erste Trennstufe 30 ist vorzugsweise als ein- oder mehrstufige Attritionszelle 36 ausgebildet. Der mit öligen Anhaftungen verunreinigte Zunderschlamm wird in der Attritionszelle 36 desagglomeriert. Das Agglomerat löst sich auf, wodurch die öligen Verunreinigungen freigelegt werden. In der Attritionszelle 36 wird der rohe Zunderschlamm mit Wasser, insbesondere Frischwasser, vermischt und durch intensives Rühren homogenisiert. Der Prozess der Attrition wird zur Reinigung von Stoffen verwendet, die mit adsorbierten und angelagerten Fremdstoffen verunreinigt sind. Die Attritionszelle 36 besteht z.B. aus zwei Zellen, in denen jeweils ein Rührorgan angeordnet ist, das jeweils von einem regelbaren Motor 38 antreibbar ist.

Für den Einsatz im Transportmodul 100 als LKW-Auflieger ist die Attritionszelle 36 mit einem Gesamtvolumen von etwa 1000 Litern ausgelegt. Jedes Rührgerät hat eine Antriebsleistung von etwa 18,5 kW je Rührorgan.

Die Attritionszelle 36 ist vorzugsweise aus Stahl mit entsprechender Gummierung als Verschleißschutz gefertigt.

Die Attritionszelle 36 ist zweckmäßigerweise mit einem Drehmomentsensor ausgestattet, um die Feststoffkonzentration in der Attritionszelle 36 zu steuern oder zu regeln. Nimmt das Drehmoment zu, wird entsprechend die Fördermenge an Zunderschlamm reduziert, indem der frequenzgesteuerte Antriebsmotor 26 der Förderstufe 20 seine Leistung verringert.

Die Attritionszelle 36 ist ferner mit einem Regelventil für die Zugabe der Wassermenge ausgestattet. Wasser wird von einer Wasserversorgung 82 eingebracht mit etwa 5 m³/h bei Zugabe von 3 m³/h Feststoff aus rohem Zunderschlamm oder 8 m³/h pumpfähigem Zunderschlamm.

Nach hinreichender Attrition gelangt der behandelte Zunderschlamm über einen Ausgang 40 in Form eines Überlaufs in das Modul 200 mit der zweiten Trennstufe 50, die vorzugsweise einen Schraubenklassierer aufweist sowie die dritte Trennstufe 70 in Form einer Siebeinrichtung.

Der Austrag aus der Attritionszelle 36 in Richtung der zweiten Trennstufe 50 erfolgt nach Möglichkeit in freiem Gefälle. Hierfür sind die Höhenverhältnisse entsprechend angepasst. So kann die Attritionszelle 36 so hoch wie möglich im ersten Transportmodul 100 angeordnet sein, ohne die maximale Transporthöhe im ersten Transportmodul 100, entsprechend der maximal verfügbaren Transporthöhe auf dem LKW zu überschreiten.

Der in der ersten Trennstufe 30 homogenisierte Zunderschlamm fließt, nach Möglichkeit im freien Gefälle, in den Schraubenklassierer der zweiten Trennstufe 50, die in Figur 3 dargestellt ist.

Auf dem Schraubenklassierer werden die aufschwimmenden öligen Verunreinigungen abgetrennt, wobei eine Flüssig-Fest-Trennung des Zunderschlamms erfolgt. Der Zunderschlamm wird als metallisches Sediment durch die Bewegung der Schraube 56 vom tieferliegenden Eingang 52 aufwärts zum höherliegenden Ausgang 68 für Grobgut transportiert. Neben der Abreicherung des Zunderschlamms an öligen Verunreinigungen erfolgt zugleich eine Entwässerung des Sediments.

Im Sammelbehälter 54 am Eingang 52 des Schraubenklassierers schwimmen die im Zunderschlamm enthaltenen öligen Verunreinigungen auf, während die Metallpartikel sedimentieren. Die wässrige Phase läuft im eingangsnahen Teil des Schraubenklassierers über einen Ausgang 58 in Form eines Wehr-Überlaufs ab, der vorzugsweise in der Höhe einstellbar ist. Das Abwasser wird in einem Sammelbehälter 62 (Figur 1) gesammelt und mittels einer Pumpe zur Kläranlage des Stahlwerks (Einsatzort 10) gefördert. Die öligen Verunreinigungen werden über einen Ölabscheider 60 separat abgeführt und in einen Sammelbehälter 64 (Figur 1) gesammelt.

Das Sediment wird über die Bewegung der Schraube 56 nach oben in Richtung des Grobgutausgangs 68 gefördert und gleichzeitig entwässert. Die Schraube 56 wird mittels eines regelbaren Motors 66 angetrieben. Entlang der Schraube 56 ist eine Bedüsung mit Wasser aus der Wasserversorgung 82 vorgesehen, um anhaftende ölige Verunreinigungen entgegen der nach oben gerichteten Transportbewegung der Schraube 56 nach unten abspülen zu können.

Die Partikel, die in Richtung des Ausgangs 68 transportiert werden, können beispielsweise eine Partikelgröße von mehr als 60 µm aufweisen. Kleinere Partikel werden im Abwasser ausgetragen. Es sind jedoch auch andere Partikelgrößen möglich. Auch können Trennschnitte über eine Steuerung günstig angepasst werden

Eine günstige Auslegung des Schraubenklassierers ist beispielsweise ein Zulauf an Zunderschlamm aus der Attritionszelle von ca. 8 m³/h, bzw. ca. 12 t/h. Der Zulauf an Wasser zur Bedüsung entlang der Schraube 56 liegt bei 1,7 m³/h. Der Ablauf an Wasser über den Wehr-Überlauf liegt bei ca. 7,7 m³/h bzw. ca. 10 t/h. Am Ausgang 68 werden etwa 2 m³/h bzw. 4 t/h an behandeltem Zunderschlamm-Grobgut ausgetragen.

Die Reinigungsleistung des Schraubenklassierers wird hauptsächlich über die Parameter Steigung der Schraube 56, Drehzahl der Schraube 56 und Förderstrom des Materials auf der Schraube 56 beeinflusst.

Das Modul 200 ist vorzugsweise für den Betrieb herausnehmbar im ersten Transportmodul 100, vorzugsweise als Abrollplattform, gelagert oder ist alternativ in ein zweites Transportmodul 200 als LKW-Auflieger oder Anhänger integriert vorgesehen.

Der gereinigte Zunderschlamm gelangt über den Ausgang 68 in die dritte Trennstufe 70. Die dritte Trennstufe 70 kann in das zweite Modul 200 integriert sein, wie in Figur 3 dargestellt ist, oder auch als separates drittes Modul 300, insbesondere Transportmodul 300, ausgebildet sein (Figur 4), beispielsweise als Anhänger für einen LKW.

Der Zunderschlamm wird als Grobgut in einen Eingang 72 einer Siebeinrichtung der dritten Trennstufe 70 transportiert, dort durch Besprühen mit Wasser aus der Wasserversorgung 82 nochmals gereinigt und anschließend entwässert.

Die Siebeinrichtung ist vorzugsweise ein Schwingsieb mit angepasstem Siebtrennschnitt. Das Wasser wird über eine über der Siebeinrichtung angeordnete Düsenlanze eingebracht und reinigt den gereinigten Zunderschlamm weiter, wobei dieser gleichzeitig entwässert wird.

Die Reinigungsleistung des Schwingsiebs der dritten Trennstufe 70 wird hauptsächlich über die Parameter Vorschub, Schichtdicke des Gutstroms, Amplitude des Schwingsiebs, Frequenz des Schwingsiebs, die Menge des zugeführten Wassers sowie den Druck des zugeführten Wassers beeinflusst. Zum Antrieb des Schwingsiebs ist ein regelbarer Motor vorgesehen.

An die dritte Trennstufe 70 kann optional eine nicht dargestellte Entwässerungsstufe angeschlossen werden, die insbesondere eine Kammerfilterpresse und/oder eine Zentrifuge umfasst.

Das Abwasser aus der Siebeinrichtung wird über einen Ausgang 76 in einem Sammelbehälter 80 aufgefangen und zur Kläranlage des Stahlwerks am Einsatzort 10 abgeleitet. Der gereinigte Zunderschlamm wird über einen Ausgang 74 aus der dritten Trennstufe 70 ausgeleitet und in einem Sammelbehälter 78 aufgefangen und steht zur Wiederverwertung zur Verfügung.

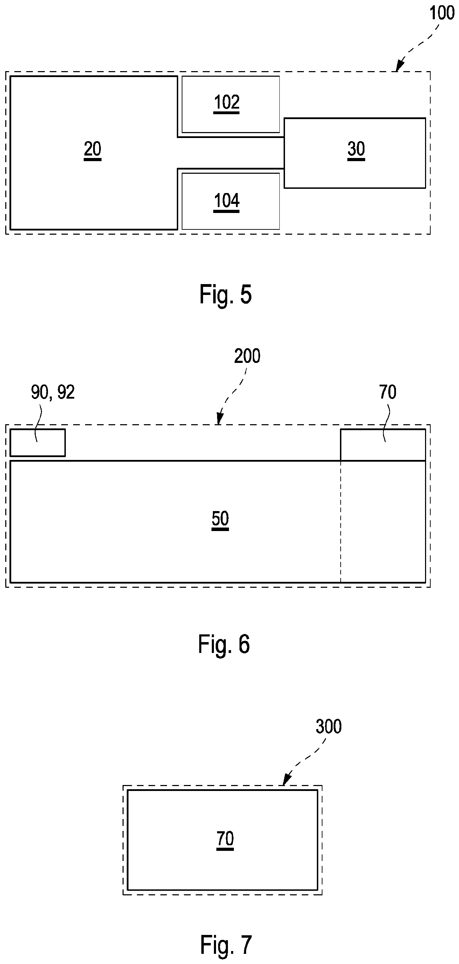

Die Figuren 5-7 zeigen Blockdiagramme von bauraumoptimierten Anordnungen der Förderstufe 20 und Trennstufen 30, 70, 50 in ihren jeweiligen modularen Zusammenstellungen. Die Transportmodule 100, 300 sind für den Straßentransport ausgebildet, insbesondere als LKW-Auflieger, Ladeplattform oder Anhänger.

Im ersten Transportmodul 100 (Figur 5) sind die Förderstufe 20 und die erste Trennstufe 30 integriert. und die erste Trennstufe 30 nehmen die erste Längserstreckung, insbesondere die Länge, des Transportmoduls 100 ein, wobei die Förderstufe 20 die zweite Längserstreckung quer zur ersten Längserstreckung, insbesondere die Breite, des Transportmoduls 100 ausfüllt. Zwischen der Förderstufe 20 und der ersten Trennstufe 30 ist beidseits der Förderbahn der Förderstufe 20 jeweils ein Bereich 102, 104 zur Aufnahme von ein oder mehreren Pumpmodulen und ein oder mehreren Sammelbehältern angeordnet. Die Pumpmodule können beispielsweise diejenigen der Förderstufe 20 und der ersten Trennstufe 30 sein.

Das zweite Modul 200 (Figur 6) mit der zweiten Trennstufe 50 und der dritten Trennstufe 70 ist von den Abmessungen gleich wie das erste Transportmodul 100. Das zweite Modul 200 ist hier als Abrollplattform ausgebildet, welches im ersten Transportmodul 100 zum Einsatzort transportiert werden kann. In dem zweiten Modul 200 ist ein Schaltschrank 90 angeordnet, welcher eine Steuer- und/oder Regeleinheit 92 zum Betreiben von einer oder mehreren der Trennstufen 30, 50, 70 und/oder der Förderstufe 20 umfasst.

Optional kann die dritte Trennstufe 70 mit der Siebeinrichtung als Transportmodul 300 (Figur 7) in Form eines Anhängers ausgebildet sein. Zum Transport kann dieses Transportmodul 300 an das erste Transportmodul 100 gekoppelt werden oder mit einem anderen Fahrzeug zum Einsatzort verbracht werden.

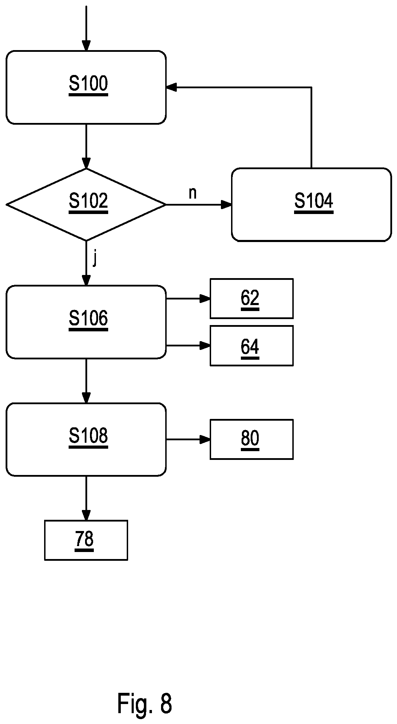

Figur 8 zeigt ein Flussdiagramm eines Verfahrens zum Betreiben einer Zunderschlammbehandlungsvorrichtung 500. Zunächst wird die Zunderschlammbehandlungsvorrichtung 500 beispielsweise mit einem LKW an ihren Einsatzort transportiert und die Transportmodule bzw. Module 100, 200 und ein gegebenenfalls vorhandenes Modul 300 aufgestellt.

Im ersten Schritt S100 wird der rohe Zunderschlamm in die erste Trennstufe 30 (Figur 1) geleitet. In der ersten Trennstufe 30 (Figur 1) werden am Zunderschlamm anhaftende ölige Verunreinigungen mechanisch abgetrennt und ein homogener fließfähiger Zunderschlamm erzeugt.

In Schritt S102 wird geprüft, ob der Zunderschlamm ausreichend fließfähig ist. Ist dies nicht der Fall ("n" in dem Flussdiagramm), werden in Schritt 104 Maßnahmen getroffen, um den Zunderschlamm ausreichend fließfähig zu machen, indem beispielsweise eine gewisse Menge Wasser in die erste Trennstufe 30 zugegeben wird und/oder die Zufuhr von rohem Zunderschlamm in die erste Trennstufe 30 angepasst wird. Ein Maß für den Zustand des Zunderschlamms ist beispielsweise das Drehmoment des Rührwerks in einer Attritionszelle der ersten Trennstufe und/oder die Stromaufnahme des Antriebs des Rührwerks.

Ist der Zunderschlamm ausreichend fließfähig ("j" in dem Flussdiagramm), wird der behandelte Zunderschlamm in die zweite Trennstufe 50 (Figur 1) geleitet, und es erfolgt in Schritt S106 eine Flüssig-Fest-Trennung mit weiterer Reinigung des Zunderschlamms mittels eines Schraubenklassierers. In der zweiten Trennstufe 50 werden durch Zugabe von Wasser anhaftende ölige Verunreinigungen vom Sediment entgegen einer Transportrichtung des Schraubenklassierers in der zweiten Trennstufe 50 abgespült. Wasser wird in einem ersten Sammelbehälter 62 und abgetrennte ölige Verunreinigungen in einem zweiten Sammelbehälter 64 aufgefangen, während das Sediment mit der Schraube des Schraubenklassierers zur dritten Trennstufe 70 weiterbefördert wird.

Das Sediment wird in Schritt S108 in der dritten Trennstufe 70 in einer Siebeinrichtung gespült, um noch anhaftende restliche ölige Verunreinigungen vom Sediment abzuspülen und dieses als gereinigtes Produkt in einen Sammelbehälter 78 auszubringen. Gegebenenfalls können Partikel des Zunderschlamms, die im Abwasser enthalten sind, mechanisch aus diesem entfernt und dem gereinigten Produkt zugegeben werden. Optional kann die Trennstufe 70 auch mehrstufig ausgebildet sein, um auch kleinkörnigeren Zunderschlamm aufzufangen.

## Patentansprüche

1. Verfahren zum Betreiben einer Zunderschlammbehandlungsvorrichtung (500), **dadurch gekennzeichnet, dass**
eine erste Trennstufe (30) mit einer Füllung von Zunderschlamm befüllt und der Zunderschlamm mit Wasser versetzt wird;
am Zunderschlamm anhaftende ölige Verunreinigungen in der ersten Trennstufe (30) durch nassmechanische Behandlung abgetrennt werden und ein fließfähiges Zunderschlammgemisch aus Zunderschlamm, öligen Verunreinigungen und Wasser erzeugt wird;
das Zunderschlammgemisch in eine zweite Trennstufe (50) mit einem Schraubenklassierer geleitet wird, in der eine Flüssig-Fest-Trennung in eine Flüssigphase und ein Sediment erfolgt;
wobei ein Eingang (52) des Schraubenklassierers unterhalb eines Ausgangs (40) der ersten Trennstufe (30) und der Ausgang (64) des Schraubenklassierers oberhalb eines Eingangs (72) einer dritten Trennstufe (70) angeordnet ist, so dass der Zunderschlamm als Sediment im Schraubenklassierer entgegen der Schwerkraft transportiert wird, und eine Abreicherung an öligen Verunreinigungen sowie eine Entwässerung erfolgt, und wobei Schmutzwasser mit öligen Verunreinigungen im Eingangsbereich des Schraubenklassierers gesammelt wird;
wobei der Zunderschlamm als Sediment von der zweiten Trennstufe (50) in die dritte Trennstufe (70) transportiert wird und der an öligen Verunreinigungen reiche Teil der Flüssigphase getrennt von der restlichen Flüssigphase aufgefangen wird; und
das Sediment in der dritten Trennstufe (70) gespült, vom Wasser getrennt und als gereinigtes Produkt ausgebracht wird.

2. Verfahren nach Anspruch 1, **dadurch gekennzeichnet, dass** eine Zugabe von Wasser in der ersten Trennstufe (30) abhängig von einem Drehmoment und/oder einer Stromaufnahme eines Rührwerks der ersten Trennstufe (30) erfolgt.

3. Verfahren nach Anspruch 1 oder 2, **dadurch gekennzeichnet, dass** in der zweiten Trennstufe (50) durch Zugabe von Wasser anhaftende ölige Verunreinigungen vom Sediment entgegen einer Transportrichtung in der zweiten Trennstufe (50) abgespült werden.

4. Verfahren nach einem der Ansprüche 1 bis 3, **dadurch gekennzeichnet, dass** die erste Trennstufe (30) abhängig von einem Drehmoment und/oder einer Stromaufnahme eines Rührwerks der ersten Trennstufe (30) betrieben wird,
und/oder
dass die dritte Trennstufe (70) abhängig von wenigstens einem Materialvorschub an Zunderschlamm und/oder einer Schichtdicke des Materialstroms an Zunderschlamm und/oder einer Menge und/oder eines Drucks einer Reinigungsflüssigkeit und/oder einer Amplitude und/oder einer Frequenz einer Siebeinrichtung in der dritten Trennstufe (70) betrieben wird.

5. Verfahren nach einem der Ansprüche 1 bis 4, **dadurch gekennzeichnet, dass** in der dritten Trennstufe (70) die eine Siebeinrichtung enthält, der gereinigte Zunderschlamm zur Feinreinigung nochmals über eine Zuführung einer Wasserzufuhr (82) mit Wasser gespült und in der Siebeinrichtung entwässert wird.

6. Zunderschlammbehandlungsvorrichtung (500) zur Durchführung eines Verfahrens nach einem der Ansprüche 1 bis 5, umfassend
eine erste Trennstufe (30), die zur Abtrennung wenigstens eines Teils von an Zunderschlamm anhaftenden öligen Verunreinigungen vorgesehen ist,
eine in Prozessrichtung (99) folgende zweite Trennstufe (50), die zur wenigstens überwiegenden Trennung des in der ersten Trennstufe (30) behandelten Zunderschlamms von den öligen Verunreinigungen vorgesehen ist, sowie
eine in Prozessrichtung (99) auf die zweite Trennstufe (50) folgende dritte Trennstufe (70), die zur wenigstens teilweisen Entwässerung des in der zweiten Trennstufe (50) gereinigten Zunderschlamms vorgesehen ist,
**dadurch gekennzeichnet,**
**dass** in Prozessrichtung (99) vor der ersten Trennstufe (30) eine Förderstufe (20) angeordnet ist, die zum Fördern des in der ersten Trennstufe (30) zu reinigenden Materials zur ersten Trennstufe (30) vorgesehen ist,
**dass** die Förderstufe (20) und die erste Trennstufe (30) baulich in ein erstes Modul (100) integriert sind,
**dass** die erste Trennstufe (30) eine Einrichtung zur nassmechanischen Behandlung des Zunderschlamms, die zweite Trennstufe (50) einen Schraubenklassierer und die dritte Trennstufe (70) eine Siebeinrichtung umfasst, und wobei
im Betrieb ein Eingang (52) des Schraubenklassierers unterhalb eines Ausgangs (40) der ersten Trennstufe (30) und der Ausgang (64) des Schraubenklassierers oberhalb eines Eingangs (72) der dritten Trennstufe (70) angeordnet ist, so dass ein Transport des in der ersten Trennstufe behandelten Zunderschlamms im Schraubenklassierer entgegen der Schwerkraft erfolgt.

7. Zunderschlammbehandlungsvorrichtung nach Anspruch 6, **dadurch gekennzeichnet, dass** die Förderstufe (20) und die erste Trennstufe (30) eine erste Längserstreckung, insbesondere Länge, des ersten Moduls (100) einnimmt.

8. Zunderschlammbehandlungsvorrichtung nach Anspruch 6 oder 7, **dadurch gekennzeichnet, dass** eine Steuer- und/oder Regeleinheit (92) zum Betreiben von einer oder mehreren der Trennstufen (30, 50, 70) und/oder der Förderstufe (20) vorgesehen ist.

9. Zunderschlammbehandlungsvorrichtung nach einem der Ansprüche 6 bis 8, **dadurch gekennzeichnet, dass** die erste Trennstufe (30) abhängig von einem Drehmoment und/oder einer Stromaufnahme eines Rührwerks der ersten Trennstufe (30) betreibbar ist,
und/oder
dass die dritte Trennstufe (70) abhängig von wenigstens einem Materialvorschub an Zunderschlamm und/oder einer Schichtdicke des Materialstroms an Zunderschlamm und/oder einer Menge und/oder eines Drucks einer Reinigungsflüssigkeit und/oder einer Amplitude und/oder einer Frequenz einer Siebeinrichtung in der dritten Trennstufe (70) zu betreibbar ist.

10. Zunderschlammbehandlungsvorrichtung nach einem der Ansprüche 6 bis 9, **dadurch gekennzeichnet, dass** im ersten Modul (100) zwischen der Förderstufe (20) und der ersten Trennstufe (30) ein oder mehrere Pumpmodule (26, 38) und ein oder mehrere Sammelbehälter (62, 64) angeordnet sind.

11. Zunderschlammbehandlungsvorrichtung nach einem der Ansprüche 6 bis 10, **dadurch gekennzeichnet, dass** eine Einfüllanordnung (22) der Förderstufe (20), insbesondere ein Einfülltrichter, eine zweite Längserstreckung, insbesondere Breite, des ersten Moduls (100) einnimmt.

12. Zunderschlammbehandlungsvorrichtung nach einem der Ansprüche 6 bis 11, **dadurch gekennzeichnet, dass** die zweite Trennstufe (50) in ein zweites Modul (200) integriert ist, das für den Betrieb herausnehmbar im ersten Modul (100) gelagert vorgesehen ist.

13. Zunderschlammbehandlungsvorrichtung nach Anspruch 12, **dadurch gekennzeichnet, dass** die dritte Trennstufe (70) im zweiten Modul (200) integriert ist,
oder,
dass die dritte Trennstufe (70) in ein drittes Modul (300) integriert ist, wobei das dritte Modul (300) insbesondere als Transportmodul (300) für den Straßentransport ausgebildet ist, insbesondere als Transportcontainer oder Ladeplattform.

14. Zunderschlammbehandlungsvorrichtung nach einem der Ansprüche 12 bis 13, **dadurch gekennzeichnet, dass** das zweite Modul (200) als Transportmodul (200) für den Straßentransport ausgebildet ist, insbesondere als Transportcontainer oder Ladeplattform.

15. Zunderschlammbehandlungsvorrichtung nach einem der Ansprüche 6 bis 14, **dadurch gekennzeichnet, dass** eine Zufuhreinrichtung (82) für die Zufuhr von Wasser in die erste Trennstufe (30) vorgesehen ist, mittels derer ein pumpfähiger Zunderschlamm, insbesondere mit einer definierten Obergrenze an Feststoffgehalt, herstellbar ist, und/oder
dass an der ersten Trennstufe (30) ein Einlass (34) für pumpfähigen Zunderschlamm vorgesehen ist.

16. Zunderschlammbehandlungsvorrichtung nach einem der Ansprüche 6 bis 15, **dadurch gekennzeichnet, dass** die Einrichtung zur nassmechanischen Behandlung des Zunderschlamms in der ersten Trennstufe (30) eine Attritionszelle umfasst.

17. Zunderschlammbehandlungsvorrichtung nach einem der Ansprüche 6 bis 16, **dadurch gekennzeichnet, dass** die Siebeinrichtung in der dritten Trennstufe (70), ein Schwingsieb umfasst.

18. Mobiles System mit einer Zunderschlammbehandlungsvorrichtung (500) nach einem der Ansprüche 6 bis 17, welche ein erstes Modul (100) umfassend wenigstens eine erste Trennstufe (30), ein zweites Modul (200) umfassend wenigstens eine zweite Trennstufe (50) und ein drittes Modul (300) umfassend wenigstens eine dritte Trennstufe (70) aufweist, wobei wenigstens eines der Module (100, 200, 300) als für den Straßentransport ausgebildetes Transportmodul ausgebildet ist.

19. Mobiles System nach Anspruch 18, wobei das erste Modul (100) als Transportmodul (100) ausgebildet ist, wobei die erste Trennstufe (30) mit einem Gesamtvolumen von etwa 1000 Litern ausgelegt ist, und/oder wobei die erste Trennstufe (30) mit ihrem Ausgang (40) nahe einer maximal verfügbaren Transporthöhe des Transportmoduls (100) angeordnet ist;
und/oder wobei das zweite Modul (200) als Transportmodul (200) ausgebildet ist, wobei die zweite Trennstufe (50) für einen Zulauf aus der ersten Trennstufe (30) von etwa 12 t/h und für einen Zunderschlamm-Austrag am Ausgang (68) von etwa 4 t/h ausgelegt ist; und/oder wobei das dritte Modul (300) als Transportmodul (300) ausgebildet ist.

20. Mobiles System nach Anspruch 18 oder 19, wobei das Transportmodul als für den Transportcontainer, Fahrzeuganhänger oder Ladeplattform ausgebildet ist.

## Claims

1. Method for operating a scale sludge treatment device (500), **characterized in that**
a first separation stage (30) is filled with a filling of scale sludge, and the scale sludge is admixed with water;
oily contaminants adhering to the scale sludge are separated off in the first separation stage (30) by wet-mechanical treatment, and a flowable scale sludge mixture composed of scale sludge, oily contaminants and water is produced;
the scale sludge mixture is conducted into a second separation stage (50), which has a screw classifier and in which a liquid-solid separation into a liquid phase and a sediment takes place;
wherein an inlet (52) of the screw classifier is arranged below an outlet (40) of the first separation stage (30), and the outlet (64) of the screw classifier is arranged above an inlet (72) of a third separation stage (70), with the result that the scale sludge is transported counter to the force of gravity as sediment in the screw classifier, and a depletion of oily contaminants and dewatering takes place, and wherein contaminated water is collected, together with oily contaminants, in the inlet region of the screw classifier;
wherein the scale sludge is transported as sediment from the second separation stage (50) into the third separation stage (70), and that part of the liquid phase which is rich in oily contaminants is collected separately from the remaining liquid phase; and
the sediment in the third separation stage (70) is rinsed, separated from the water and discharged as a cleaned product.

2. Method according to Claim 1, **characterized in that** water is added in the first separation stage (30) in a manner dependent on a torque, and/or a current consumption, of an agitator of the first separation stage (30).

3. Method according to Claim 1 or 2, **characterized in that**, in the second separation stage (50), adhering oily contaminants are rinsed off the sediment, by addition of water, counter to a transport direction in the second separation stage (50).

4. Method according to one of Claims 1 to 3, **characterized in that** the first separation stage (30) is operated in a manner dependent on a torque, and/or a current consumption, of an agitator of the first separation stage (30),
and/or
**in that** the third separation stage (70) is operated in a manner dependent on at least one material advancement of scale sludge and/or a layer thickness of the material stream of scale sludge and/or a quantity and/or a pressure of a cleaning liquid and/or an amplitude and/or a frequency of a screen device in the third separation stage (70).

5. Method according to one of Claims 1 to 4, **characterized in that**, in the third separation stage (70), which contains a screen device, the cleaned scale sludge is, for the purpose of fine cleaning, rinsed again with water via feeding from a water supply (82) and dewatered in the screen device.

6. Scale sludge treatment device (500) for carrying out a method according to one of Claims 1 to 5, comprising
a first separation stage (30), which is provided for separating off at least a portion of oily contaminants adhering to scale sludge,
a second separation stage (50), which follows in the process direction (99) and which is provided for the at least predominant separation of the scale sludge, treated in the first separation stage (30), from the oily contaminants, and
a third separation stage (70), which follows the second separation stage (50) in the process direction (99) and which is provided for the at least partial dewatering of the scale sludge cleaned in the second separation stage (50),
**characterized**
**in that**, upstream of the first separation stage (30) in the process direction (99), there is arranged a conveyance stage (20) which is provided for conveying to the first separation stage (30) the material to be cleaned in the first separation stage (30),
**in that** the first conveyance stage (20) and the first separation stage (30) are structurally integrated into a first module (100),
**in that** the first separation stage (30) comprises a device for the wet-mechanical treatment of the scale sludge, the second separation stage (50) comprises a screw classifier and the third separation stage (70) comprises a screen device, and wherein,
during operation, an inlet (52) of the screw classifier is arranged below an outlet (40) of the first separation stage (30), and the outlet (64) of the screw classifier is arranged above an inlet (72) of the third separation stage (70), with the result that scale sludge treated in the first separation stage is transported counter to the force of gravity in the screw classifier.

7. Scale sludge treatment device according to Claim 6, **characterized in that** the conveyance stage (20) and the first separation stage (30) adopt a first length extent, in particular length, of the first module (100) .

8. Scale sludge treatment device according to Claim 6 or 7, **characterized in that** a control and/or regulating unit (92) is provided for the operation of one or more of the separation stages (30, 50 ,70) and/or the conveyance stage (20).

9. Scale sludge treatment device according to one of Claims 6 to 8, **characterized in that** the first separation stage (30) is able to be operated in a manner dependent on a torque, and/or a current consumption, of an agitator of the first separation stage (30),
and/or
**in that** the third separation stage (70) is able to operated in a manner dependent on at least one material advancement of scale sludge and/or a layer thickness of the material stream of scale sludge and/or a quantity and/or a pressure of a cleaning liquid and/or an amplitude and/or a frequency of a screen device in the third separation stage (70).

10. Scale sludge treatment device according to one of Claims 6 to 9, **characterized in that**, in the first module (100), one or more pump modules (26, 38) and one or more collecting containers (62,64) are arranged between the conveyance stage (20) and the first separation stage (30).

11. Scale sludge treatment device according to one of Claims 6 to 10, **characterized in that** a filling arrangement (22) of the conveyance stage (20), in particular a filling funnel, adopts a second length extent, in particular width, of the first module (100) .

12. Scale sludge treatment device according to one of Claims 6 to 11, **characterized in that** the second separation stage (50) is integrated into a second module (200) which is provided stored in the first module (100) so as to be removable for the operation.

13. Scale sludge treatment device according to Claim 12, **characterized in that** the third separation stage (70) is integrated into the second module (200), or
**in that** the third separation stage (70) is integrated into a third module (300), wherein the third module (300) is designed in particular as a transport module (300) for road transport, in particular as a transport container or loading platform.

14. Scale sludge treatment device according to either of Claims 12 and 13, **characterized in that** the second module (200) is designed as a transport module (200) for road transport, in particular as a transport container or loading platform.

15. Scale sludge treatment device according to one of Claims 6 to 14, **characterized in that** a supply device (82) for the supply of water to the first separation stage (30) is provided, by means of which device a pumpable scale sludge, in particular having a defined upper solids content limit, is able to be produced, and/or
**in that** an inlet (34) for pumpable scale sludge is provided at the first separation stage (30).

16. Scale sludge treatment device according to one of Claims 6 to 15, **characterized in that** the device for the wet-mechanical treatment of the scale sludge in the first separation stage (30) comprises an attrition cell.

17. Scale sludge treatment device according to one of Claims 6 to 16, **characterized in that** the screen device in the third separation stage (70) comprises a vibrating screen.

18. Mobile system having a scale sludge treatment device (500) according to one of Claims 6 to 17, which has a first module (100) comprising at least one first separation stage (30), a second module (200) comprising at least one second separation stage (50), and a third module (300) comprising at least one third separation stage (70), wherein at least one of the modules (100, 200, 300) is designed as a transport module designed for road transport.

19. Mobile system according to Claim 18, wherein the first module (100) is designed as a transport module (100), wherein the first separation stage (30) is configured with a total volume of approximately 1000 litres, and/or wherein the first separation stage (30) is arranged with its outlet (40) close to a maximum available transport height of the transport module (100);
and/or wherein the second module (200) is designed as a transport module (200), wherein the second separation stage (50) is configured for a feed rate from the first separation stage (30) of approximately 12 t/h and for a scale sludge discharge rate at the outlet (68) of approximately 4 t/h; and/or wherein the third module (300) is designed as a transport module (300).

20. Mobile system according to Claim 18 or 19, wherein the transport module is designed as a transport container, vehicle trailer or loading platform.

## Revendications

1. Procédé pour faire fonctionner un dispositif de traitement de boues de battitures (500), **caractérisé en ce que**
un premier étage de séparation (30) est rempli avec un remplissage de boues de battitures et les boues de battitures sont mélangées avec de l'eau ; les impuretés huileuses adhérant aux boues de battitures dans le premier étage de supérieur (30) sont séparées par un traitement mécanique humide et un mélange coulant de boues de battitures constitué de boues de battitures, d'impuretés huileuses et d'eau est produit ;
le mélange de boues de battitures est conduit à un deuxième étage de séparation (50) avec un classificateur à vis, dans lequel a lieu une séparation fluides-solides pour obtenir une phase liquide et un sédiment ;
une entrée (52) du classificateur à vis étant disposée en dessous d'une sortie (40) du premier étage de séparation (30) et la sortie (64) du classificateur à vis étant disposée au-dessus d'une entrée (72) d'un troisième étage de séparation (70), de telle sorte que les boues de battitures soient transportées sous forme de sédiment dans le classificateur à vis à l'encontre de la force de gravité, et un appauvrissement en impuretés huileuses ainsi qu'une déshydratation ayant lieu, et l'eau sale étant accumulée avec les impuretés huileuses dans la région d'entrée du classificateur à vis ;
les boues de battitures étant transportées sous forme de sédiment depuis le deuxième étage de séparation (50) dans le troisième étage de séparation (70), et la partie riche en impuretés huileuses de la phase liquide étant récupérée séparément du reste de la phase liquide ; et
le sédiment, dans le troisième étage de séparation (70), étant rincé, séparé de l'eau, et évacué sous forme de produit épuré.

2. Procédé selon la revendication 1, **caractérisé en ce que** l'on ajoute de l'eau dans le premier étage de séparation (30) en fonction d'un couple et/ou d'une consommation de courant d'un agitateur du premier étage de séparation (30).

3. Procédé selon la revendication 1 ou 2, **caractérisé en ce que** dans le deuxième étage de séparation (50), les impuretés huileuses adhérant sont séparées du sédiment par rinçage par ajout d'eau à l'encontre d'une direction de transport dans le deuxième étage de séparation (50).

4. Procédé selon l'une quelconque des revendications 1 à 3, **caractérisé en ce que** le premier étage de séparation (30) est activé en fonction d'un couple et/ou d'une consommation de courant d'un agitateur du premier étage de séparation (30),
et/ou
**en ce que** le troisième étage (70) est activé en fonction d'au moins une avance de matériau des boues de battitures et/ou d'une épaisseur de couche du courant de matériau des boues de battitures et/ou d'une quantité et/ou d'une pression d'un fluide d'épuration et/ou d'une amplitude et/ou d'une fréquence d'un dispositif de tamisage dans le troisième étage de séparation (70) .

5. Procédé selon l'une quelconque des revendications 1 à 4, **caractérisé en ce que** dans le troisième étage de séparation (70) qui contient un dispositif de tamisage, les boues de battitures purifiées sont encore une fois rincées avec de l'eau en vue d'un nettoyage fin par apport d'une alimentation en eau (82) et sont déshydratées dans le dispositif de tamisage.

6. Dispositif de traitement de boues de battitures (500) pour mettre en oeuvre un procédé selon l'une quelconque des revendications 1 à 5, comprenant :
un premier étage de séparation (30) qui est prévu pour séparer au moins une partie des impuretés huileuses adhérant aux boues de battitures,
un deuxième étage de séparation (50) suivant, dans la direction de processus (99), qui est prévu pour séparer au moins principalement les boues de battitures présentes dans le premier étage de séparation (30) des impuretés huileuses, et
un troisième étage de séparation (70) suivant le deuxième étage de séparation (50) dans la direction de processus (99), qui est prévu pour au moins en partie déshydrater les boues de battitures épurées dans le deuxième étage de séparation (50),
**caractérisé**
**en ce que** dans la direction de processus (99) avant le premier étage de séparation (30), est disposé un étage de transport (20) qui est prévu pour transporter la matière à épurer dans le premier étage de séparation (30) au premier étage de séparation (30),
**en ce que** l'étage de transport (20) et le premier étage de séparation (30) sont intégrés structurellement dans un premier module (100),
**en ce que** le premier étage de séparation (30) comprend un dispositif pour le traitement mécanique humide des boues de battitures, le deuxième étage de séparation (50) comprend un classificateur à vis et le troisième étage de séparation (70) comprend un dispositif de tamisage, et
pendant le fonctionnement, une entrée (52) du classificateur à vis est disposée en dessous d'une sortie (40) du premier étage de séparation (30) et la sortie (64) du classificateur à vis est disposée au-dessus d'une entrée (72) du troisième étage de séparation (70), de telle sorte qu'un transport des boues de battitures traitées dans le premier étage de séparation dans le classificateur à vis s'effectue à l'encontre de la force de gravité.

7. Dispositif de traitement de boues de battitures selon la revendication 6, **caractérisé en ce que** l'étage de transport (20) et le premier étage de séparation (30) présentent une première étendue longitudinale, notamment une longueur, du premier module (100).

8. Dispositif de traitement de boues de battitures selon la revendication 6 ou 7, **caractérisé en ce qu'**une unité de commande et/ou de régulation (92) est prévue pour le fonctionnement d'un ou plusieurs des étages de séparation (30, 50, 70) et/ou de l'étage de transport (20).

9. Dispositif de traitement de boues de battitures selon l'une quelconque des revendications 6 à 8, **caractérisé en ce que** le premier étage de séparation (30) peut fonctionner en fonction d'un couple et/ou d'une consommation de courant d'un agitateur du premier étage de séparation (30), et/ou
le troisième étage de séparation (70) peut fonctionner en fonction d'au moins une avance de matériau des boues de battitures et/ou d'une épaisseur de couche du courant de matériau des boues de battitures et/ou d'une quantité et/ou d'une pression d'un fluide d'épuration et/ou d'une amplitude et/ou d'une fréquence d'un dispositif de tamisage dans le troisième étage de séparation (70) .

10. Dispositif de traitement de boues de battitures selon l'une quelconque des revendications 6 à 9, **caractérisé en ce que** dans le premier module (100) entre l'étage de transport (20) et le premier étage de séparation (30) sont disposés un ou plusieurs modules de pompe (26, 38) et un ou plusieurs récipients de collecte (62, 64).

11. Dispositif de traitement de boues de battitures selon l'une quelconque des revendications 6 à 10, **caractérisé en ce qu'**un agencement de remplissage (22) de l'étage de transport (20), en particulier une trémie de remplissage, présente une deuxième étendue en longueur, en particulier une largeur, du premier module (100).

12. Dispositif de traitement de boues de battitures selon l'une quelconque des revendications 6 à 11, **caractérisé en ce que** le deuxième étage de séparation (50) est intégré dans un deuxième module (200) qui est prévu de manière supportée et amovible dans le premier module (100) en vue du fonctionnement.

13. Dispositif de traitement de boues de battitures selon la revendication 12, **caractérisé en ce que** le troisième étage de séparation (70) est intégré dans le deuxième module (200),
ou
le troisième étage de séparation (70) est intégré dans un troisième module (300), le troisième module (300) étant réalisé notamment sous forme de module de transport (300) pour le transport sur route, en particulier sous forme de conteneur de transport ou de plate-forme de chargement.

14. Dispositif de traitement de boues de battitures selon l'une quelconque des revendications 12 à 13, **caractérisé en ce que** le deuxième module (200) est réalisé sous forme de module de transport (200) pour le transport sur route, en particulier sous forme de conteneur de transport ou de plate-forme de chargement.

15. Dispositif de traitement de boues de battitures selon l'une quelconque des revendications 6 à 14, **caractérisé en ce qu'**il est prévu un dispositif d'alimentation (82) pour l'alimentation en eau dans le premier étage de séparation (30), au moyen duquel des boues de battitures pouvant être pompées peuvent être produites, notamment avec une limite supérieure de teneur en matières solides définie, et/ou
**en ce qu'**une entrée (34) pour les boues de battitures pouvant être pompées est prévue au niveau du premier étage de séparation (30).

16. Dispositif de traitement de boues de battitures selon l'une quelconque des revendications 6 à 15, **caractérisé en ce que** le dispositif pour le traitement mécanique humide des boues de battitures dans le premier étage de séparation (30) comprend une cellule d'attrition.

17. Dispositif de traitement de boues de battitures selon l'une quelconque des revendications 6 à 16, **caractérisé en ce que** le dispositif de tamisage dans le troisième étage de séparation (70) comprend un tamis vibrant.

18. Système mobile comprenant un dispositif de traitement de boues de battitures (500) selon l'une quelconque des revendications 6 à 17, qui présente un premier module (100) comprenant au moins un premier étage de séparation (30), un deuxième module (200) comprenant au moins un deuxième étage de séparation (50) et un troisième module (300) comprenant au moins un troisième étage de séparation (70), au moins l'un des modules (100, 200, 300) étant réalisé sous forme de module de transport pour le transport sur route.

19. Système mobile selon la revendication 18, dans lequel le premier module (100) est réalisé sous forme de module de transport (100), le premier étage de séparation (30) est conçu avec un volume total d'environ 1000 litres, et/ou dans lequel le premier étage de séparation (30) est disposé avec sa sortie (40) à proximité d'une hauteur de transport maximale disponible du module de transport (100) ;
et/ou dans lequel le deuxième module (200) est réalisé sous forme de module de transport (200), le deuxième étage de séparation (50) étant conçu pour une alimentation à partir du premier étage de séparation (30) d'environ 12 t/h et pour une évacuation de boues de battitures à la sortie (68) d'environ 4 t/h ;
et/ou dans lequel le troisième module (300) est réalisé sous forme de module de transport (300).

20. Système mobile selon la revendication 18 ou 19, dans lequel le module de transport est réalisé en tant que conteneur de transport, remorque de véhicule ou plate-forme de chargement.
